**Europäisches Patentamt**

**European Patent Office**

**Office européen des brevets**

(19)

(11) Publication number: **0 127 982**
**B1**

(12) # EUROPEAN PATENT SPECIFICATION

(45) Date of publication of patent specification: **10.08.88**

(51) Int. Cl.⁴: **C 11 B 3/14,** B 01 D 5/00

(21) Application number: **84303491.9**

(22) Date of filing: **23.05.84**

(54) Deodorisation of triglyceride oil.

(30) Priority: **25.05.83 GB 8314496**

(43) Date of publication of application:
**12.12.84 Bulletin 84/50**

(45) Publication of the grant of the patent:
**10.08.88 Bulletin 88/32**

(84) Designated Contracting States:
**AT BE CH DE FR GB IT LI NL SE**

(56) References cited:
**CH-A- 228 918**
**GB-A- 404 547**
**GB-A-1 080 057**
**GB-A-1 438 847**

(73) Proprietor: **ATLAS-DANMARK A/S**
**Baltorpvej 154**
**DK-1750 Ballerup Copenhagen (DK)**

(72) Inventor: **Merk, Werner**
**Droegenhorst 15**
**D-2110 Buchholz (DE)**

(74) Representative: **Ryrlén, Evert et al**
**ALFONS HEDBERGS PATENTBYRÄ AB**
**Aschebergsgatan 35**
**S-411 33 Göteborg (SE)**

Courier Press, Leamington Spa, England.

## Description

The present invention relates to a process for deodorizing triglyceride oil and an apparatus for carrying out said process.

Traditionally, deodorization of triglyceride oil involves heating the oil under low-pressure and passing it through steam, which entrains objectionable volatile substances and other material. The treated oil is cooled and is available for further processing. The steam and entrained distillation vapours are condensed and are either disposed of or valuable materials are extracted from the distillate prior to disposal. Conventionally, condensation occurs by direct contact with water. To effect condensation and removal of distillate from the condenser large amounts of water are required, which can cause problems in disposing of the effluent formed.

One approach to overcome the effluent disposal problem is to use indirect surface condensers. Their use, however, in the past has on the whole been deliberately avoided as the condensate of water and entrained materials is well known to form an intractable emulsion which has proved not only to be very difficult to clean from the condenser surface, but also, since it builds up steadily, to reduce the efficacy of the condenser. One attempt to provide a process involving the use of a surface condenser which allegedly avoided the problems associated with the condensate emulsion is described in DE—A—29 38 805 which teaches condensing the steam and entrained materials at a temperature above 30°C and relatively high pressures requiring higher energy input.

An alternative approach to the problem is advocated in GB—A—1 080 057 that relates to a refining process comprising deacidification and deodorization of glyceride oils and fats and an equipment for said process. The main object of said process is to provide a refining process for glyceride oils and fats utilizing high vacuums of approximately 0.67 mbar measurable in the still——functioning i.a. as a deodorizing chamber—and requiring at the same time distilling temperatures lower than those adopted heretofore. It is another object of said process to allow, together with the refining and the simultaneous deodorization, the molecular structure of the oils and the fats to be preserved as well as permitting full recovery of distilled products. It is a still further object of the invention to obtain the vacuum required by simplified means.

In said process the hot product refined by subjecting it to stripping by means of steam under vacuum, wherein the so called cold steam to be introduced in the hot product for stripping has a pressure of approx. the same value as the vacuum under which the process is carried out and a temperature which is lower than the temperature of the hot product to be refined, the temperature of the cold steam being in the range of 10—35°C. After the stripping operation the fat acids are condensed in a condenser of conventional type with a stainless container in which they are cooled spontaneously to ambient temperature, whence the condensed parts collect in the stainless container whilst the more volatile parts and the steam leaving said condenser via a duct, are precipitated in the refrigerator or trap or low temperature condenser, whence they are discharged when a predetermined accumulation level has been reached. The vacuum source operates after the refrigeration stage. The temperature range of the refrigerator was −20°C to −40°C to precipitate the steam therein in the form of ice, without allowing it to reach the source, i.e. the pump, itself. The temperature of the hot product within the still may be between 170°C and 230°C.

When the cold steam of 10—35°C—that may be obtained by water evaporation at room temperature—at low pressure, viz. 0.13 to 1.06 mbar, enters into contact with the hot oil and abrupt (explosive) expansion of the steam takes place. This abrupt expansion increases the agitation of the oil and enhances the stripping action.

Now, having regard to the above mentioned or referred to prior art it is the object of the present invention to provide a process which solves two of the problems specified above, viz. the formation of the condensate which it is very difficult to remove from the condenser surfaces, and the formation of emulsions, especially intractable emulsions.

The solution to the two stated problems is provided by a process for deodorizing a triglyceride oil in which steam is passed through said triglyceride oil under a vacuum and in which said steam and volatile materials from the oil carried by said steam are condensed, which process is characterized in that said steam is dry steam (as defined in the description), that the temperature of the steam is about 160—280°C, that the head space pressure in the deodorizing chamber is between 0.1 and 8.0 mbar, that the vapour phase consists substantially of said steam and said volatile materials from the oil and possibly of neutral droplets of neutral oil, that the pressure of said vapour phase is increased from between said 0.1—8.0 mbar to between 10 and 60 mbar after having left said deodorizing chamber and prior to entry into the indirect condenser, that said vapour phase is flowed through said indirect condenser at a pressure of less than about 60 mbar and a Reynolds number of less than about 2300, that the temperature of the flow path of said indirect condenser is maintained between 0 and 25°C, that said vapour phase comprises less than 100 mg per $m^3$ of steam when measured under the conditions prevailing in the headspace above the oil, that the flow rate of the vapour phase through said flow path is maintained substantially constant with respect to the cross-sectional area of said flow path and that the Reynolds number of the vapour phase entering said flow path is substantially equal to the Reynolds number of the vapour phase leaving said flow path.

The advantageous effects achieved on performing the inventive process reside in the formation of a condensate which can be readily removed from the condenser surface and in the avoidance of the formation of emulsions.

As a corollary to the first advantageous effect stated the efficacy of the condenser is not steadily reduced and to the second advantageous effect state no intractable emulsions are formed.

By "dry" steam is meant herein steam in which the equilibrium vapour pressure of pure water is higher than the pressure under which the steam is maintained prior to its passage through the oil.

As the steam passes through the oil it is not only volatilises, as desired, volatile materials, but it can also entrain droplets of neutral oil. Preferably, the oil is at a temperature between 180 and 270°C. The stated level of oil required in the vapour to be condensed can be achieved in a number of ways. For example the velocity and pressure of the steam can be controlled so that the amount of entrained oil in the vapour phase is reduced. To achieve a level of less than 10 mg oil per m³ steam of entrained oil, as measured in the headspace above the oil, the velocity of steam ($\dot{m}_s$/A) is controlled to between about 1.7 and 16. 0 kg per hour and square meter cross-sectional area of headspace of the deodorizer. The actual velocity selected will depend on the headspace pressure according to the formula:

$$\dot{m}_s/A \leqslant 5.5\sqrt{P}$$

where

$\dot{m}_s$ = mass of steam per time unit (kg/h)
P = head space pressure (mbar)
A = cross sectional area deodorizer (m²)

In practice, a combination of means to separate entrained oil droplets and attention to steam velocity is preferably employed so that steam velocities in excess of 16.0 kg/h can be employed per m² cross-sectional area of headspace of deodorizer. Preferred steam velocities can be up to a factor of 4 higher than that given by the above equation and can thus lie between 16.8 and 64 kg/hm². The particular procedure selected in any case will depend on the system employed. For example, higher pressures between 4.00 and 8.00 mbar can be employed with a packed column deodorizer. In use, the present process can employ a vapour phase having a neutral oil content down to 0.01 mg per m³ steam when measured under the conditions prevailiing in the headspace above the oil.

The vapour phase is condensed to a liquid phase. The pressure of the vapour phase is increased to above 10 mbar, but from an economic point of view not more than about 60 mbar prior to entry into the condenser which is operated at a temperature between 0° and 25°C and can be cooled by any suitable medium, for example water. To increase the pressure of the vapour phase a mechanical pump is employed. A mechanical pump is preferred over a conventional steam booster as it imparts less energy to the vapour and hence lessens the risk that an emulsion may form.

In order to achieve a certain rate of condensation of condensate in the condenser means the flow path through the condenser means preferably has a cross-sectional area which at least in part decreases in the direction of flow of the vapour phase. The decrease in cross-sectional area of the flow path is arranged so that the flow rate of the vapour phase through the condenser means is maintained substantially constant with respect to the cross-sectional area of the flow path. For any one case the flow path is thus preferably arranged such that the Reynolds number of the vapour entering the flow path is substantially equal to the Reynolds number of the vapour phase leaving the flow path. The decrease is such that the ratio of the cross-sectional area of the inlet to the flow path to the cross-sectional area of the outlet to the flow path lies within the range of between 50:1 and 5:1. The decrease is preferably due to the deposition of condensate as the vapour phase passes along the flow path. Due to the decrease, deposition of each of the components of the vapour phase having condensation requirements with the temperature and pressure conditions of the flow path can be achieved such that the sole effluent from the flow path can be reduced to residual air and moisture only. It can thus be possible to arrange for the effluent composition to be suitable for direct release into the atmosphere. The condenser means can be in one or more parts, for example it may be convenient to arrange the condenser means so that between 60 and 85 wt % of the vapour phase condenses in a part having a relatively wide flow path and the remainder of the condensable material in the vapour phase condenses is a part having a relatively narrow flow path.

The flow path through the condenser is preferably tortuous. Increased heat and mass transfer and hence deposition of condensate can thus be obtained. Laminar flow (i.e. Reynolds number <2300) is, however, maintained throughout the flow path. Preferably, the Reynolds number of the vapour phase in the flow path is below 1000 and above 10. The flow path is preferably defined by inter alia tubular members of the condenser carrying the cooling medium. The tubular members are preferably finned and can be separated by one or more baffles.

The present process can be operated as a batch process, a semi-continuous process or a continuous process. As the condensate is in liquid form it can be continuously pumped from the condenser. The collected condesate is preferably separated into two or more portions to separate for example useful tocopherols from the remainder of the condensate mixture. We have found that the present condensate readily allows separation into two or more portion or phases.

The equipment for deodorizing glyceride oils and fats according to the process dealt with in the above GB—A—1 080 057 comprises a steam source, a deodorization still, cooling means, viz. a condenser and a refrigerator, and a vacuum source, wherein the cooling means are arranged between the vacuum source and the still and the vacuum is transmitted via the cooling means to the still and thence to the steam source through ducts connecting the individual pieces of equipment. The refrigerator is next to the vacuum source and the condenser is placed between the refrigerator and the deodorization still. The steam source may be a boiler in which the water is at room temperature and the evaporation is due only to the vacuum being in the range of 0.13 to 1.06 mbar as indicated above.

The way of using this equipment and the conditions used in the operation of this equipment are described above together with a description of the phenomenon occuring when the cold steam encounters the hot oil.

The advantageous effects achieved when employing the apparatus are the formation of a condensate which can be readily removed from the condenser surfaces and the avoidance of the formation of emulsions.

As a corollary to the first advantageous effect stated the efficacy of the condenser is not steadily reduced and to the second advantageous effect stated no intractable emulsions are formed.

The flow path has at least in part a cross-sectional area which decreases in the direction of flow of the vapour phase.

The rate of decrease of the cross-sectional area of the flow path is such that the ratio of the cross-sectional area of the inlet to the cross-sectional area of the outlet to the flow path lies within the range of from 50:1 to 5:1. The rate of decrease selected in any one case will be determined inter alia by the ratio of condensable to non-condensable material in the vapour phase and heat and mass transfer characteristics of the vapour phase. Suitably, the decrease is such that the Reynolds number of the vapour phase at the inlet is substantially equal to the Reynolds number of the vapour phase at the outlet.

The condenser means is adapted to maintain pressure and temperature conditions in the flow path of between 10 mbar and 60 mbar and 0°C and 24°C. Suitable cooling agent is water. Suitable pump means, for example mechanical pump, is located ahead of the condenser means.

The flow path is tortuous. The tortuosity is preferably provided by tubular members of the condenser which are preferably finned. Baffles may also be provided in the condenser.

Preferably, the apparatus includes valve means adapted to close the entrance to the flow path. The apparatus can moreover include means to separate into one or more portions condensate formed in the said indirect condenser.

The present invention is applicable to the treatment of any triglyceride oil which requires deodorization treatment, optionally in combination with distillative deacidification. Examples of such oils are soya bean oil, sunflower oil, palm oil, rapeseed oil, coconut oil, fish oil tallow, mixtures and fractions thereof. Particularly coconut oil and soyabean oil can be subjected to distillative deacidification by the present process and apparatus.

An embodiment of the present invention will now be described by way of example only with reference to the accompanying drawings; wherein:

Fig. 1 shows in diagrammatic form one embodiment of an apparatus for carrying out the present invention;

Fig. 2 is a vertical elevation view of the inside of condenser 14 of Fig. 1; and

Fig. 3 is a horizontal cross-section along the line a-a in Fig. 2.

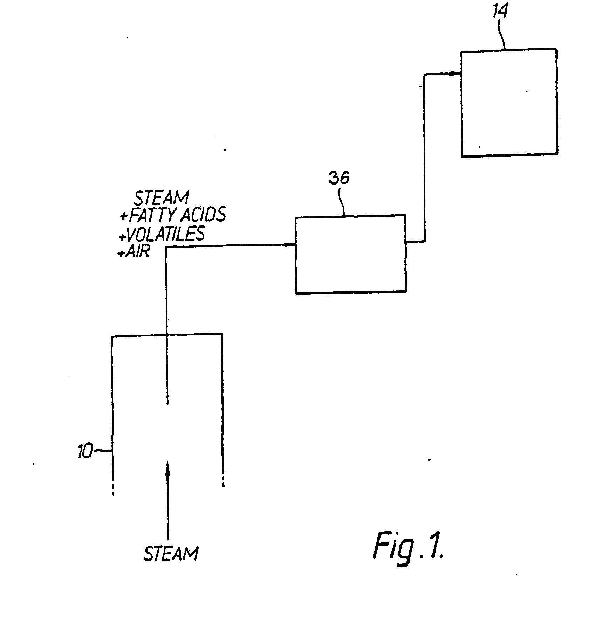

Referring firstly to Fig. 1 the apparatus includes a deodorizer chamber 10 having an inlet for steam and an outlet for volatile materials. Exit and entry means (not shown) are also provided for oil. The outlet leads to mechanical pump 36 to increase the pressure. An outlet from the mechanical pump leads to the condenser 14. An outlet from the condenser 14 leads to a pump for moving the product to e.g. a storage tank.

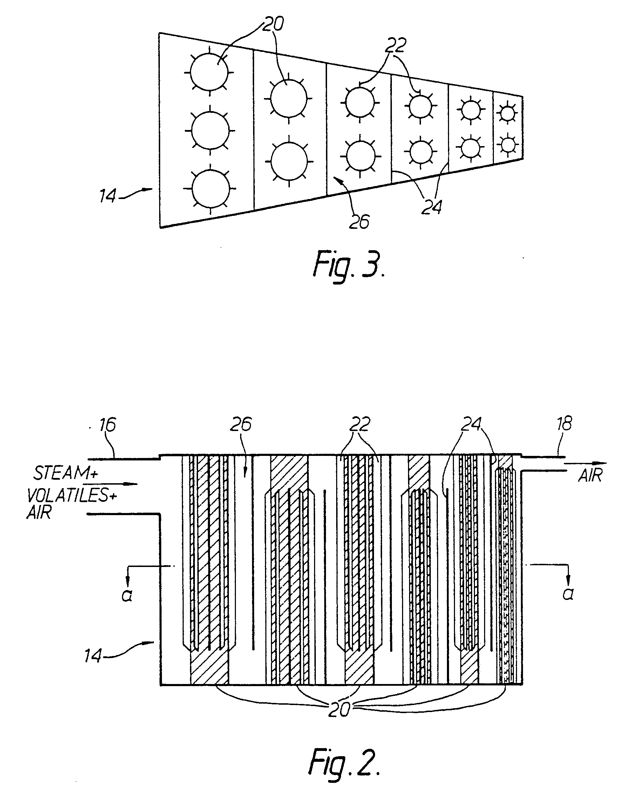

The interior structure of the condenser 14 is described with reference to Figs. 2 and 3. At one lateral end face the condenser 14 has an inlet 16 and at an opposite and narrower lateral end face an outlet 18. Between the inlet 16 and the outlet 18 are arranged a plurality of tubes 20 extending the full height of the condenser 14 and arranged in rows transverse to the two said end faces. Each of the tubes 20 is finned longitudinally. The arrangement of the tubes in rows and of the finning on the tubes is chosen so as to achieve laminar flow conditions. Each tube carries a heat exchange medium which, depending on use, is liquid ammonia or water. With respect to each row of tubes 20 the fins 22 extend alternately from the ceiling and the floor of the condenser 14, in each case stopping short of the floor and ceiling, respectively, as shown in Fig. 2. Each row of tubes 20 is separated from its neighbour or neighbours by respective fixed vertical baffles 24 which extend alternately from the ceiling and the floor and, as shown in Fig. 2, stop short of the floor and ceiling, respectively. The finned tubes 20 and the baffles 24 thus define a tortuous path 26 from the inlet 16 to the outlet 18.

The cross sectional diameter of the tubes 20 and the spacing between adjacent tubes and between the neighbouring rows decreases on passing from the inlet 16 to the outlet 18. Suitably, at spacing between the closest points of adjacent finned tubes at the inlet end of the flow path is about 100 mm and between adjacent tubes at the outlet end of the flow path about 10 mm or as close as possible. The dimensions of the end faces, tube spacings and dimensions are selected so that the cross sectional area of the tortuous flow path 26 decreases on passing from the inlet 16 to the outlet 18. The ratio of the cross sectional area of the inlet to the cross-sectional area of the outlet of the flow path is 20:1. The change in cross-sectional area is selected so that the heat transfer coefficient between the medium passing through the condenser and the surface of the finned tubes 20 remains substantially uniform as material is condensed in the condenser, i.e. so that the Reynolds number of the vapour phase at the inlet is substantially equal to the Reynolds number of the vapour phase at the outlet.

In operation, the deodorizer chamber is filled with oil to be treated. The chamber is evacuated to 0.5 to 2.0 mbar and the oil is heated to the desired temperature. Super-heated steam is fed into the oil. The resulting vapour phase having a pressure of from 0.5 to 2.0 mbar and comprising steam, volatile materials and possibly droplets of neutral oil entrained by the steam on its passage through the oil passes to the mechanical pump 36 and onto condenser 14 and enters the flow path 26.

Example

The example illustrates the use of the present process and apparatus to form a liquid condensate direct. Using an embodiment in which the vapour cooler is omitted and a mechanical vacuum pump 36 is located intermediate the deodorizer chamber 10 and condenser 14, 300 kg neutralised and bleached soya bean oil are deodorized at a temperature of 240°C and a pressure of 2.0 mbar dry steam being passed through the chamber 10 at a constant rate of 2.0 kg/h. The resulting phase is fed through the mechanical pump 36 to increase the pressure to 42 mbar. The vapour phase has a Reynolds number of about 500 and is led into the condenser 14 which is cooled with water at a temperature of about 20°C. The liquid condensate comprising a mixture of water and fatty material not in the form of the emulsion could be readily pumped away by means of a pump to e.g. a storage tank. The neutral oil content in the vapour phase is less than 10 mg per m$^3$ steam as measured in the conditions in the deodorizer chamber headspace.

**Claims**

1. A process for deodorizing a triglyceride oil in which steam is passed through said triglyceride oil under a vacuum and in which said steam and volatile materials from the oil carried by said steam are condensed, characterized in that said steam is dry steam, that the temperature of the steam is about 160—280°C, that the head space pressure in the deodorizing chamber (10) is between 0.1 and 8.0 mbar, that the vapour phase consists substantially of said steam and said volatile materials from the oil and possibly of neutral droplets of neutral oil, that the pressure of said vapour phase is increased from between said 0.1 and 8.0 mbar to between 10 and 60 mbar after having left said deodorizing chamber (10) and prior to entry into indirect condenser (14) that said vapour phase is flowed through said indirect condenser (14) at a pressure of less than about 60 mbar and a Reynolds number of less than about 2300, that the temperature of the flow path (26) of said indirect condenser (14) is maintained between 0 and 25°C, that said vapour phase comprises less than 100 mg per m$^3$ of steam when measured under the conditions prevailing in the headspace above the oil, that the flow rate of the vapour phase through said flow path (26) is maintained substantially constant with respect to the cross-sectional area of said flow path and that the Reynolds number of the vapour phase entering said flow path (26) is substantially equal to the Reynolds number of the vapour phase leaving said flow path (26).

2. A process according to claim 1, characterized in that the vapour phase has a Reynolds number of less than 1000.

3. A process according to claim 1 or claim 2, characterized in that the velocity of said steam lies between 1.7 and 16.0 kg per h and m$^2$ cross-sectional area of head space above the oil.

4. A process according to claim 1 or claim 2, characterized in that the velocity of said steam lies between 6.8 and 64 kg per h and m$^2$ cross-sectional area of headspace above the oil.

5. A process according to any one of the preceding claims, characterized in that the condensate being moved away is subjected to a separation into at least two portions.

**Patentansprüche**

1. Verfahren zur Desodorierung eines Triglyceridöls, bei welchem Dampf unter Vakuum durch dieses Oel geleitet wird, und bei welchem dieser Dampf sowie von diesem Dampf mitgeführte flüchtige Substanzen kondensiert werden, dadurch gekennzeichnet, dass der genannte Dampf Trockendampf ist; dass die Dampftemperatur ungefähr 160—280°C beträgt; dass der Druck im oberen Raum der Desodorierungskammer (10) zwischen 0,1 und 8,0 mbar liegt; dass die Dampfphase im wesentlichen aus dem erwähnten Dampf, den erwähnten flüchtigen Substanzen aus dem Oel und eventuell aus neutralen Tröpfchen neutralen Oels besteht; dass der Druck dieser Dampfphase, nachdem sie die genannte Desodorierungskammer (10) verlassen hat, und vor dem Eintritt in den indirekten Kondensator (14), von diesen 0,1 bis 8,0 mbar auf zwischen 10 und 60 mbar erhöht wird; dass diese Dampfphase unter einem Druck von weniger als ungefähr 60 mbar und mit einer Reynoldszahl von weniger als ungefähr 2300 durch diesen indirekten Kondensator (14) geleitet wird; dass die Temperatur des Strömungspfades (26) im genannten indirekten Kondensator (14) zwischen 0 und 25°C gehalten wird; dass diese Dampfphase, gemessen unter den im über dem Oel befindlichen oberen Raum herrschenden Bedingungen, weniger als 100 mg/ m$^3$ Dampf enthält; dass die Strömungsgeschwindigkeit der Dampfphase durch diesen Strömungspfad (26) in bezug auf dessen Querschnittsfläche im wesentlichen konstant gehalten wird; und dass die Reynoldszahl der in diesen Strömungspfad eintretenden Dampfphase in wesentlichen gleich der Reynoldszahl der diesen Strömungspfad verlassenden Dampfphase ist.

2. Verfahren nach Anspruch 1, dadurch gekennzeichnet, dass die Dampfphase eine Reynoldszahl von weniger als 1000 aufweist.

3. Verfahren nach Anspruch 1 oder 2, dadurch gekennzeichnet, dass die Geschwindigkeit des genannten Dampfes zwischen 1,7 und 16,0 Kg pro Stunde und Quadratmeter Querschnittsfläche des über dem Oel befindlichen oberen Raums beträgt.

4. Verfahren nach Anspruch 1 oder 2, dadurch gekennzeichnet, dass die Geschwindigkeit des genannten Dampfes zwischen 6,8 und 64 Kg pro Stunde und Quadratmeter Querschnittsfläche des über dem Oel befindlichen oberen Raums beträgt.

5. Verfahren nach einem der vorhergehenden Ansprüche, dadurch gekennzeichnet, dass das entnommene Kondensat einer Trennung in mindestens zwei Teile unterzogen wird.

## Revendications

1. Procédé de désodorisation d'une huile triglycéridique dans lequel de la vapeur est envoyée sous vide à travers cette huile triglycéridique et dans lequel ladite vapeur et des matériaux volatiles de l'huile portés par ladite vapeur sont condensés, caractérisé en ce que ladite vapeur est de la vapeur sèche, que la température de la vapeur est d'environ 160—280°C, que la pression d'espace de tête dans la chambre de désodorisation (10) est entre 0,1 et 8,0 mbar, que la phase vapeur consiste substantiellement en cette vapeur et ces matériaux volatiles de l'huile et éventuellement en gouttes neutres d'huile neutre, que la pression de ladite phase vapeur est augmentée à partir desdits 0,1 à 8,0 mbar à une valeur entre 10 et 60 mbar après avoir quitté ladite chambre de désodorisation (10) et evant d'entrer dans le condenseur indirect (14) ladite phase vapeur s'écoulant à travers ledit condenseur indirect (14) à une pression inférieure à environ 60 mbar et un nombre de Reynold inférieur à environ 2300, que la température du chemin d'écoulement (26) dudit condenseur indirect (14) est maintenue entre 0 et 25°C, que ladite phase vapeur comprend moins de 100 mg par $m^3$ de vapeur lorsque mesuré dans les conditions prédominantes dans l'espace de tête au-dessus de l'huile, quie la vitesse d'écoulement de la phase vapeur à travers ledit chemin d'écoulement (26) est maintenue substantiellement constante relativement à la surface de la section transversale dudit chemin d'écoulement et que le nombre de Reynold de la phase vapeur entrant dans ledit chemin d'écoulement (26) est substantiellement égal au nombre de Reynold de la phase vapeur quittant ledit chamin d'écoulement (26).

2. Procédé selon la revendication 1, caractérisé en ce que la phase vapeur a un nombre de Reynold inférieur à 1000.

3. Procédé selon la revendication 1 ou la revendication 2, caractérisé en ce que la vitesse de ladite vapeur est comprise entre 1,7 et 16,0 kg par h et $m^2$ de surface de la section transversale de l'espace de tête au-dessus de l'huile.

4. Procédé selon la revendication 1 ou la revendication 2, caractérisé en ce que la vitesse de ladite vapeur est comprise entre 6,8 et 64 kg par h et $m^2$ de surface de la section transversale de l'espace de tête au-dessus de l'huile.

5. Procédé selon n'importe laquelle des revendications précédentes, caractérisé en ce que le condensé évacué est soumis à une séparation en au moins deux parties.

STEAM
+FATTY ACIDS
+VOLATILES
+AIR

36

14

10

STEAM

Fig.1.

**0 127 982**

Fig. 3.

STEAM+
VOLATILES+
AIR

AIR

Fig. 2.

2